# EUROPEAN PATENT APPLICATION

(11) **EP 4 708 499 A1**
(43) Date of publication of application: **11.03.2026**
(21) Application number: 25768546.1
(22) Date of filing: 27.02.2025
(51) Int. Cl.: H01M 50/211, H01M 50/249, H01M 50/593

(54) **ENERGY STORAGE DEVICE COMPRISING BATTERY MODULES**

(30) Priority: 07.03.2024 KR 20240032328
(71) Applicant: LG Energy Solution, Ltd., Seoul 07335 (KR)
(72) Inventor: OH, Sunghoon, Daejeon 34122 (KR); LEE, Seongju, Daejeon 34122 (KR); KIM, Kiyoun, Daejeon 34122 (KR)
(74) Representative: BCKIP Part mbB
(86) International application number: PCT/KR2025/002754
(87) International publication number: WO 2025/188022

(57) **Abstract**

An energy storage device according to the present disclosure comprises a plurality of battery modules including a plurality of battery cells; a case for accommodating the battery modules; and a support frame for supporting a plurality of the battery modules in the case, wherein the support frame comprises a lower support member on which at least one battery module is supported, and an upper support member on which at least one battery module is supported.

## Description

### [TECHNICAL FIELD]

The present disclosure relates to an energy storage device comprising a battery module, and more particularly, to an energy storage device in which the installation area is reduced and the rigidity of a structure is secured.

### [BACKGROUND ART]

Secondary batteries refer to batteries that can be charged and discharged, unlike primary batteries that cannot be charged, and have been applied not only to portable device but also to electric vehicles (EV), hybrid electric vehicles (HEV), and the like that are driven by electrical driving sources.

Currently, a widely used secondary battery includes lithium ion battery, lithium polymer battery, nickel cadmium battery, nickel hydrogen battery, nickel zinc battery, and the like. The operating voltage of the unit secondary battery cell, that is, the unit battery cell, is about the range of 2.5v to 4.6v. Therefore, when the higher output voltage is required, a plurality of battery cells may be connected in series to form a battery pack. In other cases, a plurality of battery cells may be connected in parallel to form a battery pack, according to the required charging/discharging capacity of the battery pack. Accordingly, the number of battery cells included in the battery pack may be variously determined according to the required output voltage or the charging/discharging capacity thereof.

When configuring a battery pack by connecting a plurality of battery cells in series or in parallel, it is common to first configure a battery module composed of at least one battery cell, preferably a plurality of battery cells, and then configure a battery pack by using at least one such battery module and adding other components. Here, the battery module may mean a configuration in which a plurality of battery cells are connected in series or in parallel, and the battery pack may mean a configuration in which a plurality of battery modules are connected in series or in parallel to increase charging/discharging capacity and/or output voltage.

Recently, energy storage devices are being used to store generated electrical power, and the energy storage device may be configured to include a plurality of battery modules.

The battery module includes a plurality of battery cells, and when the battery module is installed horizontally (to have a wide bottom face downward), the thickness of the outer box is increased and the area to be installed is increased.

### [DETAILED DESCRIPTION OF INVENTION]

### [TECHNICAL PROBLEMS]

It is an object of the present disclosure to provide an energy storage device capable of securing the rigidity of a structure while reducing the installation area and reducing the thickness.

### [TECHNICAL SOLUTION]

An energy storage device according to an embodiment of the present disclosure includes a plurality of battery modules including a plurality of battery cells; a case for accommodating the battery modules; and a support frame for supporting a plurality of the battery modules in the case, wherein the support frame includes a lower support member supporting at least one battery module supported thereon; and an upper support member arranged above the lower support portion and supporting at least one battery module supported thereon.

In addition, the case includes a bottom portion; and a side portion disposed on one side surface of the case, wherein the side portion has a larger area than the bottom portion.

In addition, the battery module includes a plurality of battery cells; and a module case that accommodates the battery cells.

In addition, the module case includes a bottom portion and two side portions disposed on both side surfaces of the module case, and the side portions have a larger area than the bottom portion.

In addition, the battery cells are stacked vertically in the module case.

In addition, the battery cell may be a pouch-type battery cell.

In addition, the support frame further includes a plurality of vertical support members, and the lower support member and the upper support member are connected to the plurality of the vertical support members.

In addition, two vertical support members are disposed in front of the battery module in the support frame, and two vertical support members are disposed in rear of the battery module.

In addition, the vertical support member includes a pair of wing plates; and a connection plate connecting the pair of wing plates.

In addition, the pair of wing plates are formed integrally bent from the connection plate.

In addition, the lower support member includes a support plate supporting the battery module; and two horizontal members disposed on both sides of the support plate and coupled to the vertical support members, respectively.

In addition, the lower support member further includes both side parts bent downward from both ends of the support plate, and the horizontal member is formed by being bent from the side parts.

In addition, the length of the horizontal member is longer than the length of the support plate.

In addition, the lower support member further includes a sheet disposed on the support plate.

In addition, the sheet may be a polycarbonate sheet.

In addition, the upper support member includes a support plate supporting the battery module; and two horizontal members disposed on both sides of the support plate and coupled to the vertical support members, respectively.

In addition, the upper support member further includes both side parts bent downward from both ends of the support plate, and the horizontal member is formed by being bent from the side parts.

In addition, the length of the horizontal member is longer than the length of the support plate.

In addition, the upper support member further includes a sheet disposed on the support plate.

In addition, the support frame further includes a top fixing member for supporting the upper end of the support frame

In addition, the case further includes a door for opening and closing the case on one side.

### [EFFECT OF INVENTION]

According to the energy storage device of the present disclosure, it is possible to reduce the installation area, to easily install, and to secure the rigidity of the structure.

### [BRIEF DESCRIPTION OF THE DRAWING]

FIG. 1 is a perspective view of an energy storage device according to an embodiment of the present disclosure.
FIG. 2 is an exploded perspective view of the energy storage device illustrated in FIG. 1.
FIG. 3 is a perspective view of a battery module according to an embodiment of the present disclosure.
FIGS. 4 is a view showing the inside of a battery module according to an embodiment of the present disclosure.
FIG. 5 a view showing an example of a battery cell according to an embodiment of the present disclosure.
FIG. 6 is a view showing a support frame for supporting a battery module in an energy storage device according to an embodiment of the present disclosure.
FIG. 7 is a detailed view of a vertical support member in FIG. 6.
FIG. 8 is a detailed view of a lower support member in FIG. 6.
FIG. 9 is a detailed view of an upper support member in FIG. 6.
FIG. 10 is a front view of a battery module mounted on the upper support member of the support frame in FIG. 6.
FIG. 11 is a perspective view of a support frame on which a battery module is mounted in an embodiment of the present disclosure.
FIG. 12 is a perspective view of a support frame on which a battery module is mounted, viewed from a different angle in an embodiment of the present disclosure.

### [MODE FOR CARRYING OUT THE INVENTION]

The advantages and features of the present disclosure, and the methods of achieving them, will become apparent by reference to the embodiments described in detail below together with the accompanying drawings. However, the present disclosure is not limited to the embodiments disclosed below, but may be implemented in various forms different from each other, and the present embodiments are provided so that the disclosure of the present disclosure is complete, and the scope of the invention is completely known to those skilled in the art to which the present disclosure pertains, and the present disclosure is defined only by the scope of the claims. Therefore, in some embodiments, well-known process steps, well-known device structures, and well-known techniques are not specifically described in order to avoid obscuring the present disclosure. Throughout the specification, the same reference numerals refer to the same components.

In the drawings, the thickness can be expanded to clearly represent various layers and regions. Throughout the specification, the same reference numerals were attached to similar parts. When it is said that parts such as layers, films, regions, and plates are "on" other parts, this includes not only those where they are "directly on" other parts, but also those where there are still other parts in the middle. On the contrary, when a part is "directly on" another part, it means that there are no other parts in the middle. In addition, when it is said that a part such as a layer, a membrane, an area, a plate, etc. is "below" another part, this includes not only the case that it is "directly below" another part but also the case that there is another part in the middle. On the contrary, when it is said that a part is "directly below" another part, it means that there are no other parts in the middle.

An energy storage device 1000 according to a preferred embodiment of the present disclosure will be described in detail with reference to the drawings.

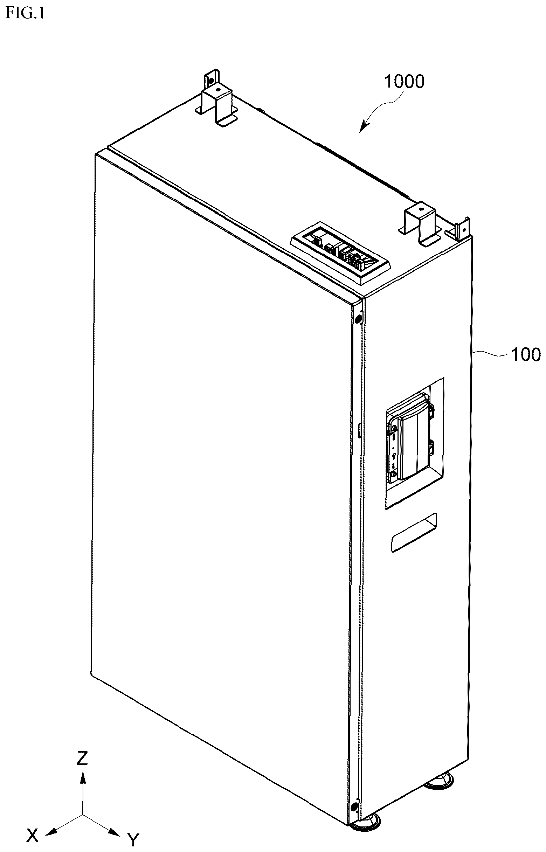

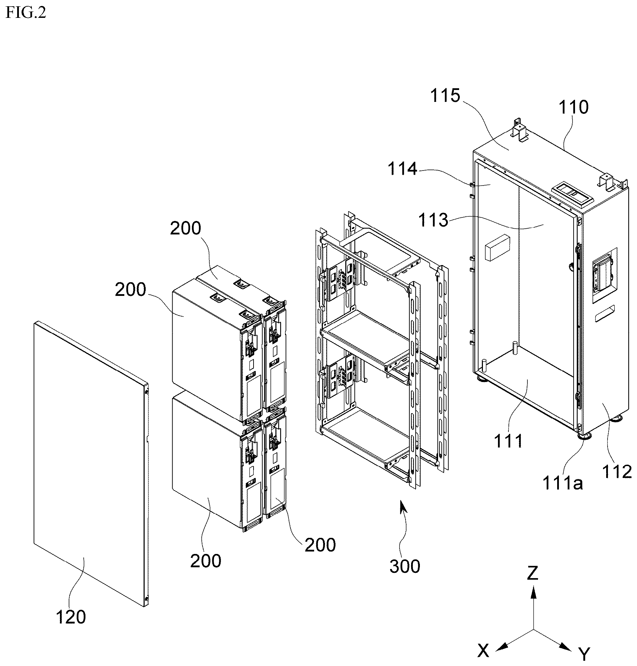

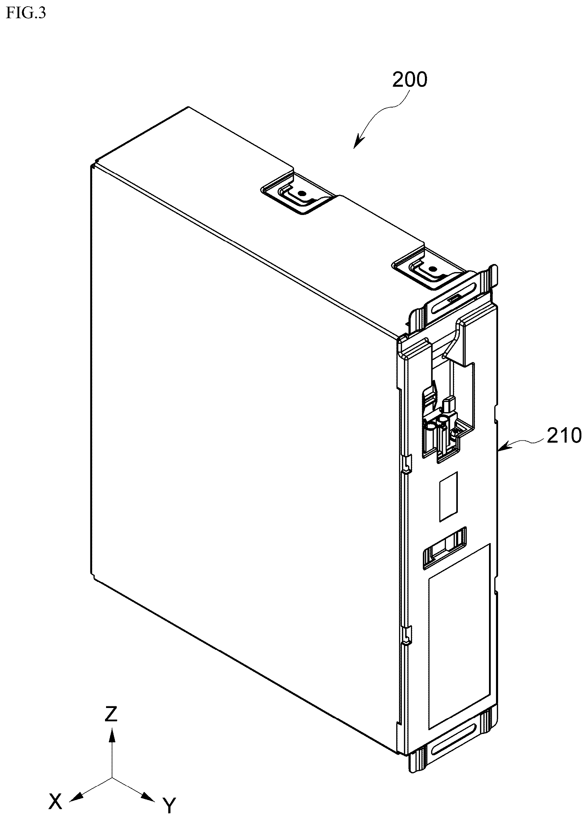

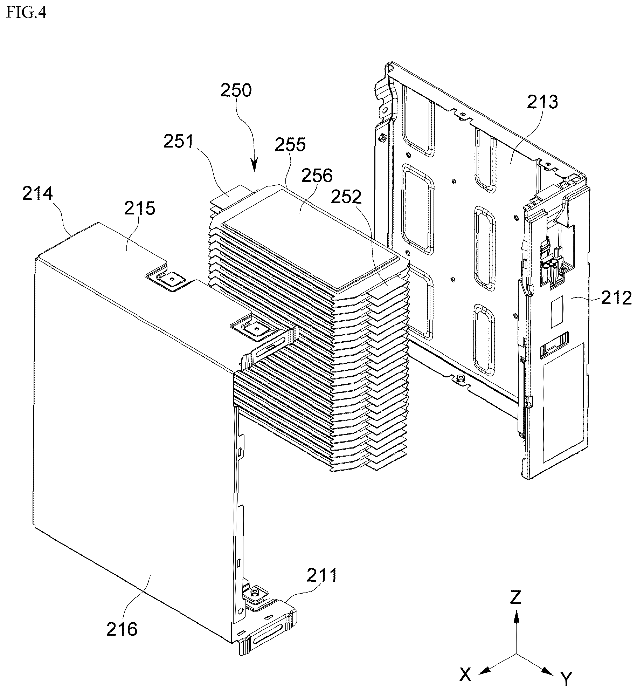

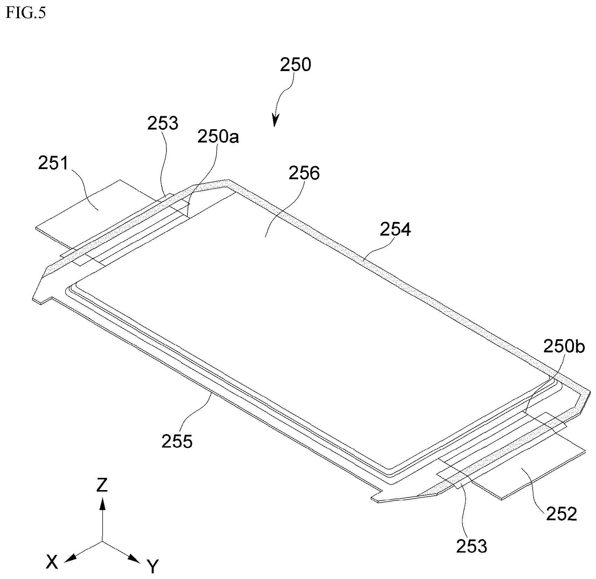

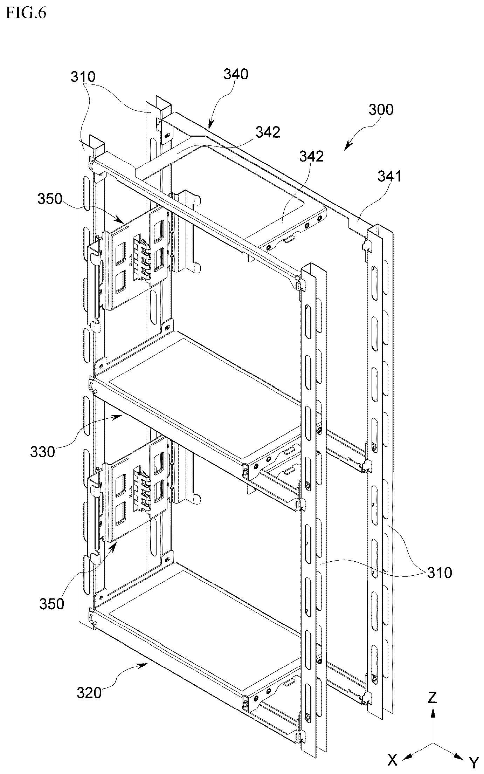

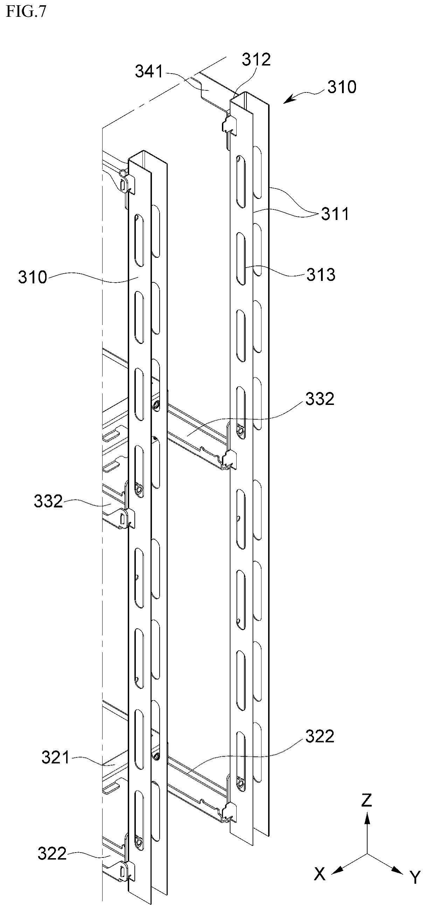

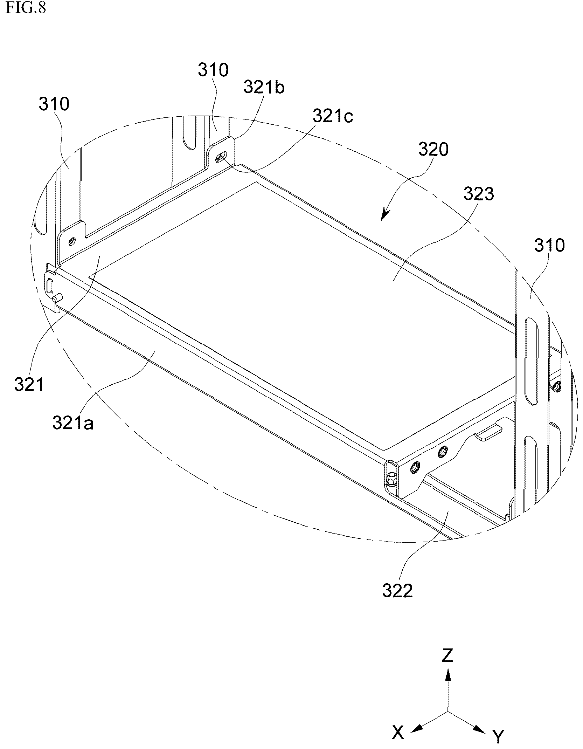

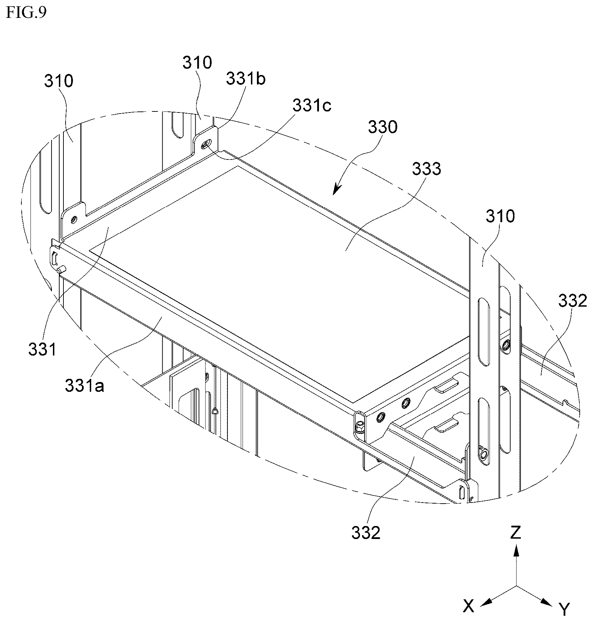

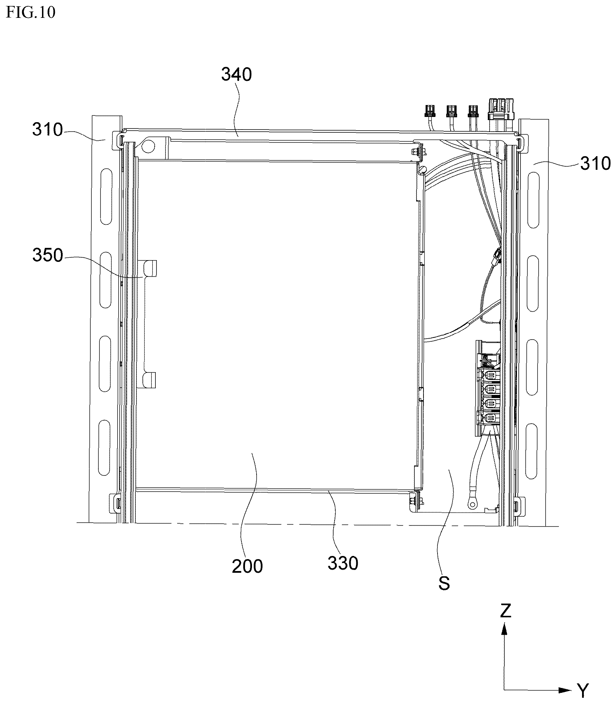

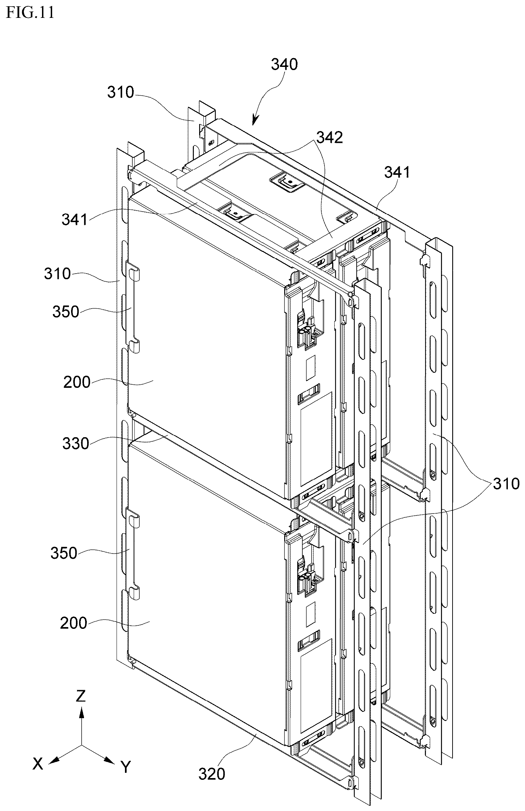

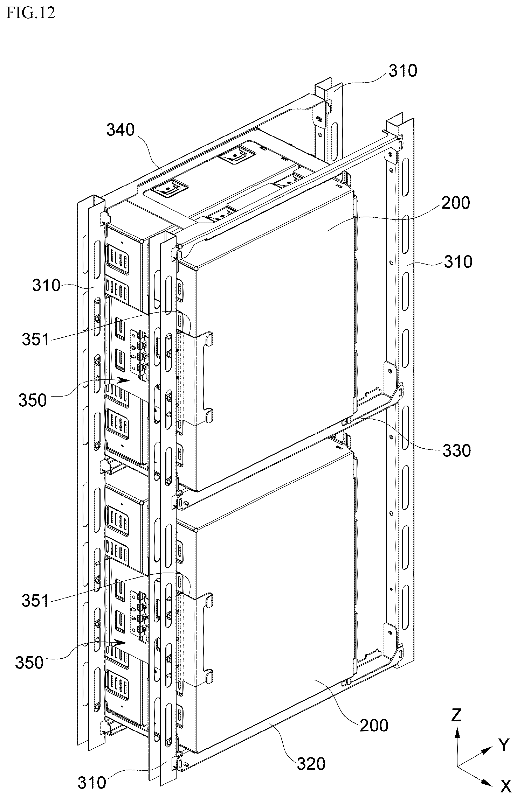

FIG. 1 is a perspective view of an energy storage device according to an embodiment of the present disclosure, FIG. 2 is an exploded perspective view of the energy storage device illustrated in FIG. 1, FIG. 3 is a perspective view of a battery module according to an embodiment of the present disclosure, FIG. 4 is a view showing the inside of a battery module according to an embodiment of the present disclosure, FIG. 5 is a view showing an example of a battery cell according to an embodiment of the present disclosure, FIG. 6 is a view showing a support frame for supporting a battery module in an energy storage device according to an embodiment of the present disclosure, FIG. 7 is a detail view of a vertical support member in FIG. 6, FIG. 8 is a detail view of a lower support member in FIG. 6, FIG. 9 is a detail view of an upper support member in FIG. 6, FIG. 10 is a front view of a battery module mounted on the upper support member of the support frame in FIG. 6, FIG. 11 is a perspective view of a support frame on which a battery module is mounted according to an embodiment of the present disclosure, FIG. 12 is a perspective view of a support frame on which a battery module is mounted according to another angle in an embodiment of the present disclosure.

The energy storage device 1000 according to an embodiment of the present disclosure may include a case 100, a plurality of battery modules 200, and a support frame 300 for supporting the battery modules 200.

The case 100 forms an enclosure of the energy storage device 1000 and may accommodate the plurality of battery modules 200 and the support frame 300, and may include the main body 110 and the door 120.

In the case 100, the main body 110 may include a bottom part 111, a front part 112, a rear part 114, a side part 113, and a top part 115.

The bottom part 111 of the main body 110 may form the bottom of the main body 110 in the form of a plate extending in the horizontal direction. The four support legs 111 a for supporting the case 100 may be disposed on the outer lower surface of the bottom part 111 at the corners of the bottom part 111.

In the main body 110, the front part 112 and the rear part 114 may form the front and rear surfaces of the case 100, respectively, and may be disposed at the front and rear edges of the bottom part 111 and the top part 115.

The side part 113 of the main body 110 forms one side surface of the case 100, and may be disposed on the left or right edges of the bottom part 111 and the top part 115, respectively.

The front part 112, the rear part 114, and the side part 113 may form a side surface of the case 100 together with the door 120.

The top part 115 of the main body 110 may be disposed on the upper portion of the case 100 to cover the inside of the case 100. An electrical device such as a Power Conversion System (PCS) may be installed on the outer upper surface of the top part 115, and may have a structure for installing an electrical device.

The door 120 may be coupled to one side of the main body 110 to open and close the inside of the case 100. The door 120 may be disposed to face the side part 113 at the opposite side of the side part 113 in the case 100 to form one side surface of the case 100.

The door 120 may be rotatably coupled to the main body 110 by a hinge, and may be fully separated from the main body 110.

In an embodiment of the present disclosure, a lock device of the door 120 may be provided.

In the case 100, the areas of the side part 113 and the door 120 may be the same or similar to each other, and the areas of the side part 113 and the door 120 may be larger than the area of the bottom part 111. For example, the area of the side surface 113 and the door 120 may be two times or more than that of the bottom part 111, and as a result, as shown in the figure, one surface having a wide area in the case 100 of the energy storage device 1000 may be disposed in a form that forms a side surface of the case 100 rather than forming a bottom, and the installation area may be reduced.

As shown in FIGS 3 and 4, the battery module 200 may include a module case 210 and a plurality of cell module assemblies (CMA) (not shown) accommodated in the module case 210.

The cell module assembly (CMA) accommodated in the module case 210 includes a plurality of battery cells, and in each cell module assembly, the plurality of battery cells may be closely arranged.

Each battery cell may be, for example, a pouch-type battery cell 250. The pouch-type battery cell 250 may have a structure in which the electrode assembly is accommodated in the pouch-type case.

As an example, a cell module assembly may include a plurality of battery cells stacked or in close contact with each other, and each battery cell may be provided with electrode leads 251 and 252 at the front end and/or the rear end, and a positive electrode lead may be provided at the front end and a negative electrode lead may be provided at the rear end. In a cell module assembly, a plurality of battery cells 250 may be disposed to be electrically connected to each other.

In the cell module assembly of this embodiment, the battery cells may be stacked vertically, and the plurality of cell module assemblies may be disposed vertically in the module case 210.

FIG. 5 is a diagram showing pouch-type battery cells 250.

The battery cell 250 provided in a pouch form may include an electrode assembly and a cell case 255 that accommodates the electrode assembly.

The cell case 255 of the battery cell 250 is for accommodating the electrode assembly, and may be a pouch-type cell case 255. The cell case 255 includes a lower case and an upper case covering the lower case, and the upper and lower cases may be integrally formed. In addition, as shown in FIG 5, the connection portions of the upper and lower cases may be bent and folded. As illustrated, the upper case may completely cover the lower case and a sealing portion 254 may be formed on the periphery.

Both the upper and lower cases may have a laminate structure including an inner coating layer, a metal layer, and an outer coating layer. The inner coating layer is positioned on the inside of the cell case 255 relative to the metal layer and should have insulation properties and electrolyte resistance since it is in direct contact with the electrode assembly. In addition, for sealing, the sealing area where the inner layers are heat-bonded is required to have excellent thermal-sealing strength. The metal layer, positioned between the inner and outer coating layers, serves as a barrier layer that prevents moisture or various gases from penetrating into the cell from the outside. Preferably, a lightweight and highly formable aluminum (Al) thin film may be used as the material for the metal layer in contact with the inner coating layer. The outer coating layer is positioned on the outside of the cell case 255 relative to the metal layer. This outer coating layer may be made of a heat-resistant polymer with excellent tensile strength, moisture impermeability, and air impermeability to ensure heat resistance and chemical resistance while protecting the electrode assembly. Examples of such polymers include nylon or polyethylene terephthalate.

The accommodation groove 256 may be formed in the upper and lower cases, respectively, and the electrode assembly may be accommodated in the accommodation groove 256 of the upper and lower cases. An upper case in the cell case 255 of the pouch-type battery cell 250 is illustrated in FIG. 5, and the lower case is disposed on the lower side thereof. In this embodiment, the lower case of the cell case 255 may be disposed to face the bottom 3211 of the module case 210, and the lower case and the accommodation groove 256 thereof may be disposed in parallel with the bottom part 211.

The electrode assembly accommodated in the cell case 255 may be one of the group consisting of a jelly-roll type electrode assembly formed of a structure in which a separator is interposed between a long sheet type positive electrode and a long sheet type negative electrode, a stack type electrode assembly formed of unit cells in which a rectangular type positive electrode and a rectangular type negative electrode are stacked in a state in which the separator is interposed between the positive electrode and the negative electrode, a stack-folding type electrode assembly in which the unit cells are wound by a long separation film, a lamination-stack type electrode assembly in which the unit cells are stacked in a state in which the separator is interposed between the positive electrode and the negative electrode and are attached to each other.

In addition, the electrode assembly may include two electrode tabs 250a and 250b, and two electrode leads 251 and 252 connected to the two electrode tabs 250a and 250b by a welding part.

One of the two electrode tabs 250a and 250b may be a positive electrode tab, and the other may be a negative electrode tab.

One of the two electrode leads 251 and 252 may be a positive electrode lead connected to a positive electrode tap, and the other one may be a negative electrode lead connected to a negative electrode tap. For example, the positive electrode lead of the electrode leads 251 and 252 may be made of aluminum (Al), and the negative electrode lead of the electrode leads 251 and 252 may be made of copper (Cu).

Lead films 253 may be attached to electrode leads 251 and 252. The lead films 253 coupled to the electrode leads 251 and 252 is positioned between the electrode leads 251 and 252 and the cell case 255 to prevent a short circuit between the electrode leads 251 and 252 and the cell case 255 and to improve the sealing force to prevent leakage of the electrolyte solution.

The two electrode leads 251 and 252 are shown to be disposed on both sides of the electrode assembly, but they may be disposed only on one side of the electrode assembly according to the arrangement of the electrode tabs.

In a cell module assembly, a battery cell is not limited to a pouch-type battery cell, but may be formed of other types of battery cells, such as a prismatic, cylindrical battery cell, etc.

The cell module assembly may be disposed in the module case 210 of the battery module 200 in an opened form without an independent housing. In addition, as another example, the cell module assembly may be in a form in which a plurality of battery cells are accommodated in the housing, and the cell module assembly may be accommodated in an individual housing and independently disposed in the module case 210.

As another example, the battery module 200 may be configured by stacking a plurality of battery cells in the module case 210.

The module case 210 may include a bottom portion 211, a front portion 212, a rear portion 214, both side portions 213 and 216, and a top portion 215.

The bottom portion 211 of the module case 210 may form the bottom of the module case 210 in the form of a plate extending in the horizontal direction.

The front portion 212 and the rear portion 214 may form the front and rear surfaces of the module case 210, respectively, and may be disposed at the front and rear edges of the bottom portion 211 and the top portion 215.

Both side portions 213 and 216 form both side surfaces of the module case 210 and may be disposed on the left and right edges of the bottom 211 and the top 215.

The front portion 212, the rear portion 214, and both side portions 213 and 216 may form side surfaces of the module case 210.

The top portion 215 may be disposed on the module case 210 to cover the inside of the module case 210.

The area of the side portions 213 and 216 in the module case 210 may be larger than the area of the bottom portion 211. For example, the area of the side portions 213 and 216 may be two times or more than that of the bottom portion 211, and as seen, one surface having a wide area in the module case 210 may be disposed in a form that forms a side surface of the module case 210 rather than forming a bottom, thereby reducing the installation area in the energy storage device 1000.

The plurality of battery modules 200 may be disposed in the support frame 300 within the case 100.

FIG. 6 is a diagram illustrating a support frame 300 that supports a battery module 200 in an energy storage device 1000 according to an embodiment of the present disclosure.

The support frame 300 may support a plurality of battery modules 200. In this embodiment, the support frame 300 may include a plurality of vertical support members 310, a lower support member 320, an upper support member 330, a top fixing member 340, and a module fixing member 350.

In this embodiment, four vertical support members 310 may be disposed, two vertical support members 310 may be disposed in front of the battery module 200, and two vertical support members 310 may be disposed in rear of the battery module 200.

The vertical support member 310 may include a pair of wing plates 311 and a connection plate 312.

A connection plate 312 disposed between the pair of wing plates 311 may connect the pair of wing plates 311. The pair of wing plates 311 and the connection plate 312 may be integrally formed, and in the vertical support member 310, the pair of wing plates 311 may be bent by a certain angle (e.g., right angle) from both ends of the connection plate 312 to the outside (in the direction opposite the battery module 200), and may be disposed parallel to each other.

A plurality of via holes 313 may be spaced apart from each of the wing plates 311 along the longitudinal direction.

The vertical support member 310 may be configured to have a pair of wing plates 311 bent on both sides of the connection plate 312, thereby reinforcing structural rigidity.

The lower support member 320 may be disposed on the lower side of the support frame 300 to support the plurality of battery modules 200.

In this embodiment, two battery modules 200 are supported by the lower support member 320, but two or more battery modules 200 may be disposed on the lower support member 320.

The lower support member 320 may include a support plate 321 and two horizontal members 322 (see FIG. 8).

The support plate 321 may be formed of a generally quadrangular plate, and the battery module 200 may be supported on the support plate 321. The bending plate 321b bent upwardly at the edge of the support plate 321 along the width direction (X-axis direction) may be integrally formed on the support plate 321 and may be coupled to the two vertical support members 310 disposed at the rear of the battery module 200 by a bolt or the like through the coupling hole 321c formed in the bending plate 321b. The support plate 321 may be coupled to the vertical support member 310 by a bolt, a rivet, or a welding. The material of the support plate 321 may be, for example, metal.

The sheet 323 may be disposed on the support plate 321. The sheet 323 may be coupled to or attached to the support plate 321 by an adhesive. The sheet 323 is, for example, a resin sheet, a polycarbonate sheet, or the like. As the sheet 323, the polycarbonate sheet exhibits excellent electrical insulating properties, durability, weather resistance, and impact resistance, and thus may stably support the high-weight battery module 200.

In this embodiment, the sheet 323 is disposed on the support plate 321 to reduce friction when the high-weight battery module 200 is disposed on the support plate 321 and may facilitate the installation of the battery module 200 and prevent scratches between contact parts.

The area of the sheet 323 may be the same as or smaller than the area of the support plate 321 and may be greater than the sum of the areas of the bottom portions 211 of the two battery modules 200.

The two side surfaces 321 a may be bent downward from both ends of the support plate 321 along the longitudinal direction (Y-axis direction). The length of the side surface 321 a along the longitudinal direction (Y-axis direction) may be the same as the length of the support plate 321.

The two horizontal members 322 may be formed by bending (e.g., bending at right angles) toward the support plate 321 from the end of the side surface 321 a. The horizontal member 322 may be parallel to the support plate 321.

The horizontal member 322 may be integrally formed with the support plate 321 and one end of each horizontal member 322 may be coupled to the lower part of the vertical support member 310 disposed in front of the battery module 200. The horizontal member 322 may be coupled to the vertical support member 310 by a bolt, a rivet, a welding, or the like.

In addition, the horizontal member 322 may be formed in the form of a plate, and may may be extended from the support plate 321 in the longitudinal direction (Y axis direction). Therefore, the length of the horizontal member 322 may be longer than the length of the support plate 321 in the direction (Y-axis direction). Therefore, the space S may be formed between the front portion of the battery module 200 disposed on the support plate 321 and the vertical support member 310 coupled to the horizontal member 322. In this embodiment, the space S is secured inside the vertical support member 310 in this way, so that insertion and assembly of the battery module 200 is easy, and electrical work is easy along with installation of electrical devices and wiring (see Fig. 4).

In the lower support member 320, the support plate 321, the side surface 321a, and the horizontal member 322 may be integrally formed.

In the lower support member 320, the side surface 321a is bent from both ends of the support plate 321, and the horizontal member 322 is bent from the side surface 321a, thereby reinforcing the rigidity and stably supporting the heavy weight battery module 200.

The upper support member 330 may be disposed on the upper side of the lower support member320 in the support frame 300 to support the plurality of battery modules 200. In this embodiment, the upper support member 330 may be disposed between the lower support member 320 and the top fixing member 340, and may be coupled approximately to a central portion of the vertical support member 310.

The configuration of the upper support member 330 is similar to the configuration of the lower support member 320. Although two battery modules 200 are supported on the upper support member 330, two or more battery modules 200 may be disposed on the upper support member 330.

The upper support member 330 may include a support plate 331 and two horizontal members 332 (see FIG. 9).

In the upper support member 330, the support plate 331 may be formed of a substantially quadrangular plate. The bending plate 331b bent upwardly at the edge of the supporting plate 331 in the width direction (X-axis direction) may be integrally formed in the supporting plate 331 and may be fixed to the two vertical support members 310 disposed at the rear of the battery module 200 by a bolt or the like through the coupling hole 331c formed in the bending plate 331b. The support plate 331 may be made of, for example, a metal material, and may be coupled to the vertical support member 310 by bolts, rivets, and welding.

A sheet 333 may be disposed on the support plate 331. The sheet 333 may be bonded or attached to the support plate 321 by an adhesive, and may be, for example, a resin sheet, a polycarbonate sheet, or the like.

Similar to the lower support member 320, the sheet 333 is disposed on the support plate 331 in the upper support member 330, so when the battery module 200 having a high weight is disposed on the support plate 331, friction is reduced, and the installation of the battery module 200 may be facilitated.

The area of the sheet 333 may be the same as or smaller than the area of the support plate 331, and may be greater than the sum of the areas of the bottom parts 211 of the two battery modules 200.

The side surface 331a may be disposed by being bent downward from both ends of the support plate 331 in the longitudinal direction (Y-axis direction). The length of the side surface 331a in the longitudinal direction (Y-axis direction) may be the same as that of the support plate 331.

The two horizontal members 332 may be formed by being bent (e.g., bent at right angles) in the direction of the support plate 321 from the end of the side surface 331a. The horizontal member 332 may be parallel to the support plate 331.

In the upper support member 330, the horizontal member 332 may be integrally formed with the support plate 331, and one end of each horizontal member 332 may be coupled to the central portion of the vertical support member 310 disposed in front of the battery module 200 by bolts, rivets, welding, etc.

In addition, the horizontal member 332 may be formed in the form of a plate, and may further extend and protrude from the supporting plate 331 in the longitudinal direction (Y-axis direction). Therefore, the length of the horizontal member 332 in the longitudinal direction (Y-axis direction) may be longer than the length of the support plate 331. Accordingly, a space S may be formed between the front portion of the battery module 200 disposed on the support plate 331 and the vertical support member 310 coupled to the horizontal member 332, and the space S is secured inside the vertical support member 310 to facilitate insertion and assembly of the battery module 200 and facilitate electrical work.

In the upper support member 330, the support plate 331, the side surface 331a, and the horizontal member 332 may be integrally formed.

As described above, in the upper support member 330, the side surface 331a is bent from both ends of the support plate 331, and the horizontal member 332 is bent from the side surface 331a to stably support the high weight battery module 200 by reinforcing the rigidity.

The top fixing member 340 may be disposed on the upper portion of the support frame 300, and may serve to fix and support the upper end of the support frame 300.

The top fixing member 340 may include two fixing members 341 and two connecting members 342.

In the top fixing member 340, one end of the fixing member 341 may be coupled to the vertical support member 310 in front of the battery module 200, and the other end of the fixing member 341 may be coupled to the vertical support member 310 in rear of the battery module 200. The two fixing members 341 may be disposed in parallel to each other. The fixing member 341 may be coupled to the vertical support member 310 by bolts, rivets, welding, or the like.

The connecting member 342 may be connected to one end of one fixing member 341 and the other end of the other fixing member 341 may be connected to another fixing member 341 to connect the two fixing members 341 to each other. The two connecting members 342 may be spaced apart from each other in the longitudinal direction (Y-axis direction) of the fixing member 341, and may be disposed in parallel to each other.

As described above, the two fixing members 341 may be connected to the two vertical support members 310 disposed in the front and rear of the battery module 200, respectively, and the two connecting members 342 may be connected to the two fixing members 341 to each other, so that the top fixing member 340 may fix and support the upper end of the support frame 300.

In this embodiment, the module fixing member 350 may be coupled to the vertical support member 310 to fix the two battery modules 200 and prevent the movement and vibration.

As shown in the drawing, the upper and lower module fixing members 350 may be disposed in the two vertical support members 310 in the rear of the battery module 200, the lower module fixing member 350 may fix the two battery modules 200 disposed in the lower support member 320, and the upper module fixing member 350 may fix the two battery modules 200 disposed in the upper support member 330.

The module fixing member 350 may include a coupling plate 351 coupled to and fixed to the two vertical support members 310, and the rear of the two battery modules 200 may be supported on the coupling plate 351.

In this embodiment, the support frame 300 has the above-described configuration to stably secure the rigidity of the structure. In addition, the energy storage device 1000 according to this embodiment has a reduced installation area and a thin thickness (X-axis distance).

The present disclosure has been described with reference to the preferred embodiments as described above, but is not limited to the above-described embodiments, and various changes and modifications may be possible by those skilled in the art without departing from the spirit of the present disclosure.

### [INDUSTRIAL APPLICABILITY]

The present disclosure can provide an energy storage device that has a reduced installation area, is easy to install, and can secure structural rigidity.

## Claims

1. An energy storage device comprising:
a plurality of battery modules including a plurality of battery cells;
a case for accommodating the battery modules; and
a supporting frame for supporting a plurality of the battery modules in the case,
wherein the supporting frame comprises: a lower support member on which at least one battery module is supported; and an upper support member on which at least one battery module is supported.

2. The energy storage device of claim 1, wherein the case comprises: a bottom part; and a side part disposed on one side surface of the case, wherein the side part has a larger area than the bottom part.

3. The energy storage device of claim 1, wherein the battery module comprises: a plurality of battery cells; and a module case that accommodates the battery cells.

4. The energy storage device of claim 3, wherein the module case comprises: a bottom portion; and two side portions disposed on both side surfaces of the module case, wherein the side portions have a larger area than the bottom portion.

5. The energy storage device of claim 4, wherein the battery cells are stacked vertically in the module case.

6. The energy storage device of claim 5, wherein the battery cell is a pouch-type battery cell.

7. The energy storage device of claim 1, wherein the support frame further comprises a plurality of vertical support members, and the lower support member and the upper support member are coupled to the plurality of the vertical support members.

8. The energy storage device of claim 1, wherein two vertical support members are disposed in front of the battery module in the support frame, and two vertical support members are disposed in rear of the battery module.

9. The energy storage device of claim 7, wherein the vertical support member comprises: a pair of wing plates; and a connection plate connecting the pair of wing plates.

10. The energy storage device of claim 9, wherein the pair of wing plates are integrally bent from the connection plate.

11. The energy storage device of claim 7, wherein the lower support member comprises: a support plate supporting the battery module; and two horizontal members disposed on both sides of the support plate and coupled to the vertical support members, respectively.

12. The energy storage device of claim 11, wherein the lower support member further comprises both side surfaces bent downward from both ends of the support plate, and the horizontal member is formed by being bent from the side surfaces.

13. The energy storage device of claim 11, wherein a length of the horizontal member is longer than that of the support plate.

14. The energy storage device of claim 11, wherein the lower support member further comprises a sheet disposed on the support plate.

15. The energy storage device of claim 14, wherein the sheet is a polycarbonate sheet.

16. The energy storage device of claim 7, wherein the upper support member comprises: a support plate supporting the battery module; and two horizontal members disposed on both sides of the support plate and coupled to the vertical support members, respectively.

17. The energy storage device of claim 16, wherein the upper support member further comprises both side surfaces bent downward from both ends of the support plate, and the horizontal member is formed by being bent from the side surfaces.

18. The energy storage device of claim 16, wherein the length of the horizontal member is longer than that of the support plate.

19. The energy storage device of claim 16, wherein the upper support further comprises a sheet disposed on the support plate.

20. The energy storage device of claim 1, wherein the support frame further comprises a top fixing member for supporting an upper end of the support frame.
